(19) Europäisches Patentamt
European Patent Office
Office européen des brevets

(11) **EP 4 477 333 A1**

(12) **EUROPEAN PATENT APPLICATION**
published in accordance with Art. 153(4) EPC

(43) Date of publication:
**18.12.2024 Bulletin 2024/51**

(21) Application number: **23749680.7**

(22) Date of filing: **27.01.2023**

(51) International Patent Classification (IPC):
**B21C 37/08** (2006.01)    **B21C 51/00** (2006.01)

(52) Cooperative Patent Classification (CPC):
**B21C 37/08; B21C 51/00**

(86) International application number:
**PCT/JP2023/002578**

(87) International publication number:
**WO 2023/149364 (10.08.2023 Gazette 2023/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.02.2022 JP 2022016940**

(71) Applicant: **NIPPON STEEL CORPORATION**
**Chiyoda-ku**
**Tokyo 100-8071 (JP)**

(72) Inventors:
• **TASHIMA, Kenzo**
  **Tokyo 100-8071 (JP)**
• **NAGAI, Kensuke**
  **Tokyo 100-8071 (JP)**
• **MURAKI, Taro**
  **Tokyo 100-8071 (JP)**
• **KOBAYASHI, Shunichi**
  **Tokyo 100-8071 (JP)**
• **TSURU, Eiji**
  **Tokyo 100-0006 (JP)**

(74) Representative: **J A Kemp LLP**
**80 Turnmill Street**
**London EC1M 5QU (GB)**

(54) **STEEL PIPE, STEEL PIPE GROUP, PIPELINE, AND METHOD FOR MANUFACTURING STEEL PIPE**

(57)    Provided is a steel pipe including: a pipe end surface that is machined and has an indentation that is a measurement mark of an instrumented indentation test; and at least one of an outer circumferential surface and an inner circumferential surface to which yield strength information corresponding to yield strength at a position of the indentation is provided. Moreover, a steel pipe group in which a plurality of steel pipes are arranged in a partition is provided. Further, a pipeline in which a plurality of the steel pipes are joined to each other by circumferential welding, in which a difference in yield strength between the steel pipes in the connection direction is 65 MPa or less is provided. Furthermore, provided is a steel pipe manufacturing method including: a preparation step of preparing a steel pipe having a machined pipe end surface; a measurement step of measuring a load-displacement characteristic on the pipe end surface by an instrumented indentation test; an acquisition step of obtaining yield strength based on the load-displacement characteristic measured in the measurement step; and a display step of displaying yield strength information on the yield strength obtained in the acquisition step on at least one of an outer circumferential surface and an inner circumferential surface of the steel pipe.

FIG. 9

**Description**

[Technical Field of the Invention]

The present invention relates to a steel pipe, a steel pipe group, a pipeline, and a steel pipe manufacturing method.

Priority is claimed on Japanese Patent Application No. 2022-016940, filed February 7, 2022, the content of which is incorporated herein by reference.

[Related Art]

Natural gas and crude oil are transported by pipelines. Pipelines of this type may be laid on the sea floor or on land.

For example, in the case of laying a pipeline on the sea floor, there are various methods for laying a pipeline, and one of the methods is a R-lay (Reel lay) method that is advantageous for cost reduction. In the R-lay method, pipe end surfaces of a plurality of steel pipes are joined to each other by circumferential welding in a base called a land spool base. As a result, the steel pipes are linearly connected to each other to form a part of the pipeline.

The length of one steel pipe is about 12 m. In the R-lay method, nearly 100 steel pipes are joined, and the total length exceeds 1 km. The joined steel pipe is wound around a drum with a diameter of about 15 m for transportation. In the steel pipe wound around the drum, circumferential welds are arranged at intervals of about 12 m along the longitudinal direction (circumferential direction of the drum).

The drum around which the joined steel pipe is wound is conveyed to a ship for laying pipelines, called laybarge. On the sea, the steel pipe wound around the drum on the ship is unwound from the drum and submerged in the sea. This results in the pipeline being laid on the sea floor. By using such a R-lay method, it is possible to circumferentially weld steel pipes on land with well-equipped equipment and connect the steel pipes to each other, so that welding operation on the sea is reduced as compared with a method of joining steel pipes on a ship, and efficient and reliable laying operation can be performed.

In the R-lay method, the pipeline is wound on a drum on land and unwound and straightened from the drum on the sea. Also, in the event of trouble, the pipeline is rewound on the drum on the sea and then unwound from the drum again. For this reason, in the R-lay method, it is required that buckling and fracture do not occur in the pipeline even when winding and unwinding of the pipeline around the drum are performed up to five times. During winding and unwinding of the pipeline, tensile and compressive plastic strains in the axial direction due to bending occur on the surface (outer circumferential surface) of the steel pipe. The magnitude of plastic strain occurred at this time is proportional to the pipe diameter (outer diameter). In a steel pipe having a practical pipe diameter of 150 mm to 500 mm, tensile and compressive strains of 1% to 3% are repeatedly applied to the steel pipe.

On the other hand, tensile strain and compressive strain may be also similarly applied to a pipeline laid on land. One example thereof is a long-range gas pipeline laid in a discontinuous permafrost zone or in a landslide area. For example, in a discontinuous permafrost zone, freezing and thawing of soil are repeated every year, and accordingly, tensile strain and compressive strain of about 2% are repeatedly applied to the steel pipe along the axial direction.

As described above, in both the case of laying a pipeline on the sea floor using the R-lay method and the case of laying a pipeline in the discontinuous permafrost zone, tensile and compressive plastic strains along the axial direction of the pipeline is repeatedly applied to the steel pipe. Conventionally, a technique for maintaining soundness of a pipeline has been required under such circumstances.

In response to such a demand, for example, Patent Document 1 discloses a pipeline and a manufacturing method thereof. Specifically, a pipeline having a plurality of welds in which end portions of a plurality of steel pipes are joined by welding is disclosed. Then, a difference between the yield strength of one steel pipe and the yield strength of the other steel pipe welded to each other and a yield ratio that is a ratio of the yield strength to a tensile strength of a steel pipe with a lower yield strength among the one steel pipe and the other steel pipe are controlled so as to satisfy a predetermined mathematical formula. According to this pipeline and the manufacturing method thereof, it is described that a pipeline that sufficiently exhibits deformation characteristics of a steel pipe can be provided.

In addition, Patent Document 2 discloses a steel pipe for a reel method in which a plurality of electric resistance welded steel pipes are joined to each other in the axial direction via circumferential welds. In Patent Document 2, setting the seam position of the electric resistance welded steel pipe to the 0 o'clock position of the pipe cross section, when the pipe cross section of the electric resistance welded steel pipe is equally divided into 12 portions around the pipe axis, and the portions are sequentially set to from the 0 o'clock to 11 o'clock positions of the pipe cross section in the clockwise direction, a range from the 2 o'clock position of the pipe cross section to the 4 o'clock position of the pipe cross section or a range from the 8 o'clock position of the pipe cross section to the 10 o'clock position of the pipe cross section of one adjacent electric resistance welded steel pipe is relatively joined to the 0 o'clock position of the pipe cross section of the other adjacent electric resistance welded steel pipe. Patent Document 2 describes that, by relatively shifting the seam positions of the respective electric resistance welded steel pipes adjacent to each other and joining the respective electric resistance welded steel pipes to each other as described above, even if the 0 o'clock position of the pipe cross section (or the 6 o'clock position of the pipe cross section) when the long steel pipe is wound around a reel is positioned on the inner peripheral side or the outer peripheral side when winding around the reel, the axial strain occurred is reduced, and local buckling and fracture are less likely to occur.

In addition, Non-Patent Document 1 describes that buckling in the vicinity of a circumferential weld can be prevented by suppressing a yield strength difference between steel pipes to be joined in a pipeline to which tensile and compressive plastic strains in the axial direction are repeatedly applied.

[Citation List]

[Patent Document]

[Patent Document 1]
PCT International Publication No. WO 2013/111902
[Patent Document 2]
PCT International Publication No. WO 2020/067064

[Non-Patent Document]

[Non-Patent Document 1]
Eiji Tsuru and 4 others, "Reeling Capability of Non-Heat-Treated ERW Line Pipes in R-lay", 2013, 1SOPE-1-13-548

[Summary of Invention]

[Problems to be Solved by the Invention]

When the pipeline is viewed along the longitudinal direction thereof, since the vicinity of the circumferential weld where the steel pipes are joined is the weakest portion of the pipeline, when tensile and compressive plastic strains are repeatedly applied in the axial direction of the pipeline, buckling may occur in the vicinity of the circumferential weld. Therefore, in order to maintain the soundness of the pipeline, it is important to prevent buckling in the vicinity of the circumferential weld.

Here, according to the pipeline and the manufacturing method thereof described in Patent Document 1, it is described that the pipeline that sufficiently exhibits deformation characteristics of the steel pipe can be provided, but on the other hand, it is also recognized that it is difficult to measure the yield strength of all the steel pipes. Therefore, as an alternative to the total number measurement, it is proposed to select and weld steel pipes with close serial numbers.

In addition, the technique described in Patent Document 2 focuses on local buckling and fracture occurring on the inner peripheral side and the outer peripheral side of the steel pipe wound around the reel, but does not prevent buckling in the vicinity of the circumferential weld.

Further, Non-Patent Document 1 discloses that the yield strength difference between the steel pipes to be joined is suppressed, but is the same as Patent Document 1 from the viewpoint that it is difficult to measure the yield strength information of all the steel pipes.

As can be seen from the related art, in order to suppress the yield strength difference between the steel pipes to be joined, information on the yield strength of all the connected steel pipes is required. Normally, as the value of the yield strength, a representative value for each lot (for example, for each identical manufacturing unit) measured by a material test is used. That is, one yield strength value is assigned as a representative value to a large number of steel pipes.

However, since this yield strength value is only a representative value of one lot, the yield strength value may be different from the actual yield strength value individually possessed by each steel pipe. In order to measure the accurate yield strength of each steel pipe, it is naturally necessary to individually perform a tensile test on each of all the steel pipes. In this case, the cost increases for performing a tensile test, and the yield decreases for collecting test pieces.

Here, a procedure of a tensile test performed on one steel pipe will be described. In the tensile test, cutting of a test piece from one end of a steel pipe, processing of the test piece, and actual measurement of yield strength are performed.

First, in the test piece cutting, a steel pipe having a length of, for example, 12 m + 0.5 m is prepared. Then, a portion with a length of about 0.5 m from the pipe end of the steel pipe is cut off and used as a test piece. This test piece corresponds to about 4% of the total length 12 m of the steel pipe, but is used only for measuring the yield strength, and is not used as an actual product.

In the subsequent test piece processing, the cut test piece is pre-processed into a state suitable for actual measurement by performing machining such as lathe machining or milling.

Then, in the actual measurement, the measured value of the yield strength is obtained by performing a tensile test.

Since the operation period required for the whole process from the taking out of the test piece to the actual measurement described above is about 20 days, it is not realistic to perform this on all of a large number of steel pipes. In addition, since a yield loss of 4% occurs from each of all the steel pipes, it is difficult to perform the test in terms of cost. Specifically describing the cost in the case of performing a tensile test of one steel pipe, first, 5000 yen is spent for gas cutting, 5000 yen is spent for the test piece processing, and 5000 yen is spent for the tensile test. In addition, a test period of two weeks is required. Naturally, the test cost and the test period increase in proportion to the number of steel pipes, and thus it is not easy to perform the test on all the steel pipes.

Furthermore, in the case of manufacturing a long structure such as a pipeline having the same length, when a test piece is cut, the length per steel pipe is shortened by cutting the test piece, and thus the number of welded portions in the total length inevitably increases as compared with the case where there is no cutting. Therefore, the cost associated with the welding operation increases.

The present invention has been made in view of the above circumstances, and with a final purpose of suppressing buckling in the vicinity of a circumferential weld between respective steel pipes when a long structure such as a pipeline is obtained by connecting a plurality of steel pipes, an object of the present invention is to provide a steel pipe and a steel pipe group in which yield strength information necessary for realizing the final purpose is individually provided, simply and with good yield. Another object of the present invention is to provide a pipeline manufactured by this steel pipe group. Furthermore, an object of the present invention is to provide a steel pipe manufacturing method for obtaining a steel pipe to which yield strength information is individually provided, simply and with good yield.

[Means for Solving the Problem]

In order to achieve the aforementioned objects, the present invention adopts the following aspects.

(1) That is, a steel pipe according to one aspect of the present invention includes:

a pipe end surface that is machined and has an indentation that is a measurement mark of an instrumented indentation test; and

at least one of an outer circumferential surface and an inner circumferential surface to which yield strength information corresponding to yield strength at a position of the indentation is provided.

According to the steel pipe according to (1) above, when a plurality of steel pipes are joined to obtain a long structure such as a pipeline, yield strength information provided to at least one of an outer circumferential surface and an inner circumferential surface of the steel pipe is referred to. Then, steel pipes having yield strengths close to each other are selected, and pipe ends thereof are butted against each other and joined by circumferential welding. As a result, the yield strength difference between the steel pipes to be joined to each other can be reliably suppressed to be low, so that occurrence of buckling in the vicinity of the circumferential weld between the steel pipes can be suppressed.

(2) In the steel pipe according to (1) above, the following configuration may be adopted:
the yield strength information includes at least one of:

a numerical value display of the yield strength;
a section display indicating a section to which the numerical value of the yield strength corresponds;
a color display indicating a section to which the numerical value of the yield strength corresponds; and
a product number display associated with the numerical value of the yield strength.

In the case of the steel pipe according to (2) above, when the yield strength information is a numerical value display of the yield strength, steel pipes with the same or similar numerical value display are selected and joined. Alternatively, when the yield strength information is a section display indicating a section to which the numerical value of the yield strength corresponds, steel pipes with the same or similar numerical values of the yield strength associated with this section (steel pipes with the same section display or close section display) are selected and joined. Alternatively, when the yield strength information is a color display color-coded for each yield strength, steel pipes with the same or similar numerical values of the yield strength associated with this color-coding (steel pipes with the same color display or similar color display) are selected and joined. Alternatively, when the yield strength information is a product number display associated with the numerical value of the yield strength, steel pipes with the same or similar numerical values of the yield strength associated with the product number display are selected and joined.

(3) Moreover, a steel pipe group according to one aspect of the present invention, wherein

all of a plurality of steel pipes arranged in a partition are the steel pipes according to (1) or (2) above.
According to the steel pipe group described in (3) above, when a plurality of steel pipes are connected from the steel pipe group to obtain a long structure such as a pipeline, yield strength information provided to at least one of an outer circumferential surface and an inner circumferential surface of the steel pipe is referred to. Then, steel pipes with the same or similar yield strength are selected, and pipe ends thereof are butted against each other and joined by circumferential welding. As a result, the yield strength difference between the steel pipes adjacent to each other can be reliably suppressed to be low, so that occurrence of buckling in the vicinity of the circumferential weld between the steel pipes can be suppressed.

(4) In the steel pipe group according to (3) above, wherein

the steel pipes are divided and arranged according to the yield strength information, in the partition.
In the case of the steel pipe group according to (4) above, when the steel pipe is taken out from the partition, the steel pipes with a low yield strength difference can be selected by referring to the division.

(5) Further, a pipeline according to one aspect of the present invention is:

a pipeline in which a plurality of the steel pipes according to any one of (1) to (4) above are joined to each other by circumferential welding, wherein
a difference in the yield strength between the steel pipes adjacent to each other in the connection direction is 65 MPa or less.
According to the pipeline described in (5) above, the difference in yield strength between the steel pipes adjacent to each other in the connection direction is suppressed to be small, so that occurrence of buckling in the vicinity of the circumferential weld between the steel pipes can be suppressed.

(6) Furthermore, a steel pipe manufacturing method according to one aspect of the present invention includes:

a preparation step of preparing a steel pipe having a machined pipe end surface;
a measurement step of measuring a load-displacement characteristic on the pipe end surface by an instrumented indentation test;
an acquisition step of obtaining yield strength based on the load-displacement characteristic measured in the measurement step; and
a display step of displaying yield strength information on the yield strength obtained in the acquisition step on at least one of an outer circumferential surface and an inner circumferential surface of the steel pipe.
According to the steel pipe manufacturing method according to (6) above, it is possible to manufacture a steel pipe on which individual yield strength information is displayed by performing the measurement step, the acquisition step, and the display step. Therefore, when a long structure such as a pipeline is obtained by joining a plurality of steel pipes, steel pipes with the same or similar yield strength can be selected by referring to the yield strength information. Then, the pipe ends of the selected steel pipes are butted against each other and joined by circumferential welding. As a result, the yield strength difference between the steel pipes adjacent to each other is reliably suppressed to be low, so that occurrence of buckling in the vicinity of the circumferential weld between the steel pipes can be suppressed.

(7) In the steel pipe manufacturing method according to (6) above,
in the display step, as the yield strength information, at least one of:

a numerical value display of the yield strength;
a section display indicating a section to which the numerical value of the yield strength corresponds;
a color display indicating a section to which the numerical value of the yield strength corresponds; and
a product number display associated with the numerical value of the yield strength,
is displayed.

In the case of the steel pipe manufacturing method according to (7) above, when the yield strength information is a numerical value display of the yield strength, steel pipes with the same or similar numerical value display are selected and joined. Alternatively, when the yield strength information is a section display indicating a section to which the numerical value of the yield strength corresponds, steel pipes with the same or similar numerical values of the yield strength associated with this section (steel pipes with the same section display or close section display) are selected and joined. Alternatively, when the yield strength information is a color display color-coded for each yield strength, steel pipes with the same or similar numerical values of the yield strength associated with this color-coding (steel pipes with the same color display or similar color display) are selected and joined. Alternatively, when the yield strength information is a product number display associated with the numerical value of the yield strength, steel pipes with the same or similar numerical values of the yield strength associated with the product number display are selected and joined.

[Effects of the Invention]

According to the steel pipe and the steel pipe group according to the above aspects of the present invention, when a long structure such as a pipeline is obtained by connecting a plurality of steel pipes, the occurrence of buckling in the vicinity of the circumferential weld between the steel pipes can be suppressed. In addition, since yield strength information based on the measurement result obtained by applying the instrumented indentation test to the machined pipe end surface is provided, the steel pipe and the steel pipe group to which the yield strength are provided simply and with good yield.

Also in the pipeline according to the above aspect, the occurrence of buckling in the vicinity of the circumferential weld between the steel pipes can be similarly suppressed.

Furthermore, according to the steel pipe manufacturing method according to the above aspect, when a long structure such as a pipeline is obtained by connecting a plurality of steel pipes, it is possible to manufacture a steel pipe individually provided with yield strength information necessary for suppressing the occurrence of buckling in the vicinity of the circumferential weld between the steel pipes. In addition, since the yield strength information is provided to the steel pipe based on the measurement result obtained by applying the instrumented indentation test to the machined pipe end surface, it is possible to manufacture a steel pipe to which the yield strength is provided simply and with good yield.

[Brief Description of the Drawings]

FIG. 1 is a graph showing a verification result of a steel pipe A.
FIG. 2 is a graph showing a verification result of a steel pipe A.
FIG. 3 is a graph showing a verification result of a steel pipe A.
FIG. 4 is a graph showing a verification result of a steel pipe B.
FIG. 5 is a graph showing a verification result of a steel pipe C.
FIG. 6 is a graph showing a verification result of a steel pipe C.
FIG. 7 is a graph showing a verification result of a steel pipe D.
FIG. 8 is a cross-sectional view of a steel pipe according to an embodiment of the present invention.
FIG. 9 is a cross-sectional view of a pipeline according to the same embodiment.
FIG. 10 is a flowchart showing a method for manufacturing a steel pipe according to the same embodiment.
FIG. 11 is a schematic view showing a state of an instrumented indentation test in the same embodiment.
FIG. 12 is a schematic view showing a state of the instrumented indentation test in the same embodiment, and is an enlarged cross-sectional view of a portion P in FIG. 11.
FIG. 13 is a schematic view showing an example of measurement points of the instrumented indentation test in the same embodiment.
FIG. 14 is a view showing an instrumented indentation direction by an arrow for each groove shape, and is an enlarged cross-sectional view of a portion corresponding to a portion P in FIG. 11. FIG. 14(a) shows a state in which the pipe end is machined and remained flattened (groove unprocessed). FIG. 14(b) shows a case where a V-shaped groove is formed on FIG. 14(a). FIG. 14(c) shows a case where a U-shaped groove is formed on FIG. 14(a). FIG. 14(d) shows a case where an X-shaped groove is formed on FIG. 14(a).
FIG. 15(a) is a graph showing a relationship between yield strength and distribution of number of steel pipes in a steel pipe group arranged on a spool base, where the horizontal axis represents the yield strength and the vertical axis represents the number of steel pipes at the yield strength. FIG. 15(b) shows an example of a pipeline in which steel pipes are taken out from the spool base shown in FIG. 15(a) and connected.
FIG. 16 is a diagram showing test results of a steel pipe A.
FIG. 17 is a diagram showing test results of a steel pipe B.
FIG. 18 is a diagram showing test results of a steel pipe C.
FIG. 19 is a diagram showing test results of a steel pipe D.

FIG. 20 is a diagram showing test results of the second example.

[Embodiments of the Invention]

In order to solve the above problems, the present inventor has extensively studied, and has focused on an instrumented indentation test as a method for measuring the yield strength of a steel pipe without lowering the yield. Therefore, the present inventor verified the validity of the yield strength calculated based on the load-displacement characteristic measured on the machined pipe end surface of the steel pipe using the instrumented indentation test. Specifically, the yield strength calculated from the result of the instrumented indentation test was compared with the yield strength measured by actually performing a tensile test. A method of measuring and calculating the yield strength using the instrumented indentation test will be described later. First, verification of examining the validity of the yield strength obtained using the instrumented indentation test by comparing the yield strength obtained by the tensile test with the yield strength obtained using the instrumented indentation test will be described. Hereinafter, the verification conditions and verification results will be described.

In this verification, the following steel pipes A to D were used.

The steel pipe A was an ERW steel pipe (Electric Resistance Welded steel pipe) subjected to heat treatment after forming. The steel pipe A had an outer diameter of 323.9 mm and a wall thickness of 14.3 mm.

The steel pipe B was an ERW steel pipe as formed. The steel pipe B had an outer diameter of 457.2 mm and a wall thickness of 20.3 mm.

The steel pipe C was an UO steel pipe as formed. The steel pipe C had an outer diameter of 508 mm and a wall thickness of 22.2 mm.

The steel pipe D was an UO steel pipe subjected to an ageing treatment after forming. As with the steel pipe C, the steel pipe D had an outer diameter of 508 mm and a wall thickness of 22.2 mm. The ageing treatment applied to the steel pipe D is for coating the surface of the steel pipe for improving corrosion resistance.

The yield strength of each of the steel pipes A to D was within a range of 400 MPa to 450 MPa. In each of the steel pipes A to D, the pipe end surface was machined and flattened on the assumption that the steel pipes were joined by circumferential welding.

An instrumented indentation test was performed on the pipe end surface (machined surface) of each of the steel pipes A to D. In the instrumented indentation test, when the wall thickness of the steel pipe was t, using the position of the outer circumferential surface of the steel pipe in the pipe end surface as a reference in the thickness direction, an indentation indenter was pressed into at least one of the positions where the distance from the outer circumferential surface toward the central axis was t/4, t/2, and 3t/4, and the yield strength was measured. In addition, a round bar tensile test piece with a diameter of 3 mm was collected from the vicinity of the position where the indentation indenter was pressed among the pipe end surfaces of the steel pipes A to D. Then, a tensile test was performed on each round bar tensile test piece to measure the yield strength. Further, a full-thickness tensile test piece was collected on the same generatrix as the position where the indentation indenter was pressed. Then, a tensile test was performed on each full-thickness tensile test piece to measure the yield strength.

Incidentally, a full-thickness tensile test is intended to collect an average value of the full thickness, and is specifically performed in a shipping test or the like.

For each of the steel pipe A and the steel pipe B which are ERW steel pipes, test pieces were collected from one position or two or more positions in the circumferential direction of pipe end surfaces of 10 different steel pipes.

In addition, regarding the steel pipe C and the steel pipe D which are UO steel pipes, a plurality of test pieces were collected from one position or two or more positions in the circumferential direction of the pipe end surface of one steel pipe.

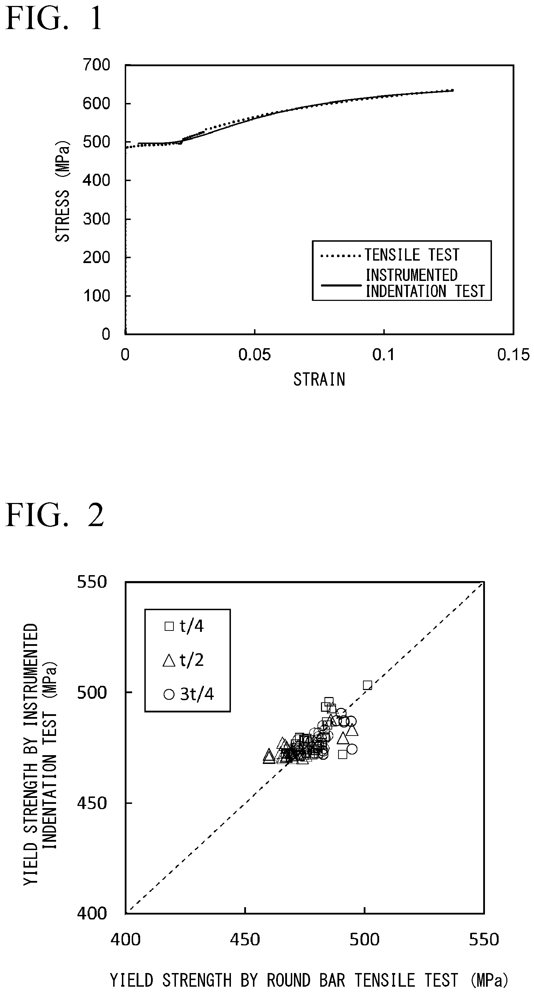

FIGS. 1 to 3 are graphs showing verification results of the steel pipe A.

FIG. 1 shows a comparison between a stress-strain curve (hereinafter, it is also referred to as an SS curve.) calculated using an instrumented indentation test and an SS curve measured by performing a round bar tensile test on the steel pipe A. In FIG. 1, the horizontal axis represents strain and the vertical axis represents stress. As is clear from FIG. 1, in the entire region of the strain (horizontal axis), it was confirmed that the stress calculation result by the instrumented indentation test (vertical axis) was in good agreement with the stress measurement result by the round bar tensile test (vertical axis).

FIG. 2 shows a relationship between yield strength calculated using an instrumented indentation test and yield strength measured by performing a round bar tensile test on the steel pipe A.

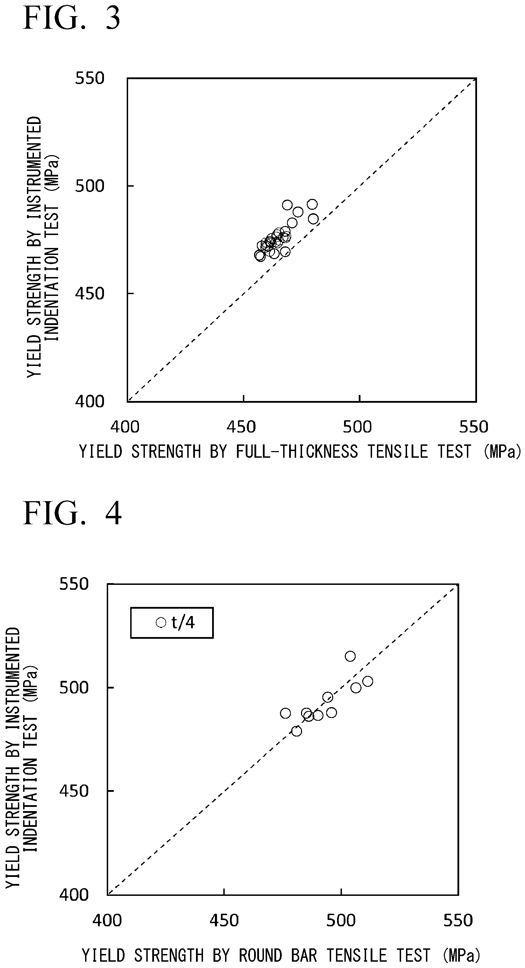

FIG. 3 shows a relationship between the yield strength calculated using an instrumented indentation test and yield strength measured by performing a full-thickness tensile test. That is, it is a comparison between the weighted average value of the results of the instrumented indentation test at each position of t/4, t/2, and 3t/4 and the value in the full-thickness tensile test.

As is clear from FIGS. 2 and 3, in the steel pipe A, both the yield strength measured by the round bar tensile test and the yield strength measured by the full-thickness tensile test showed a positive correlation with the yield strength calculated using the instrumented indentation test.

FIG. 4 is a graph showing a verification result of the steel pipe B. FIG. 4 shows a relationship between yield strength calculated using an instrumented indentation test and yield strength measured by performing a round bar tensile test on the steel pipe B.

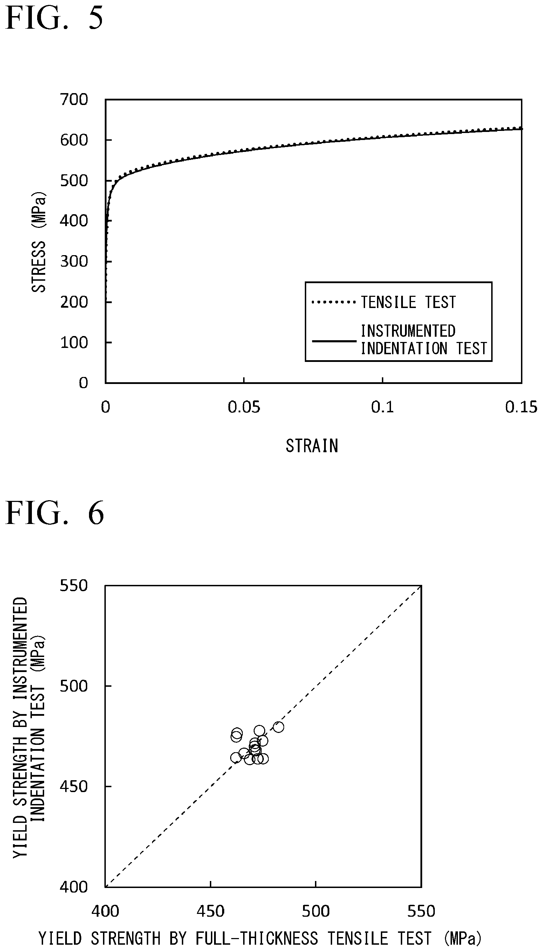

FIGS. 5 and 6 are graphs showing verification results of the steel pipe C.

FIG. 5 shows an SS curve calculated using an instrumented indentation test and an SS curve measured by performing a full-thickness tensile test.

FIG. 6 shows a relationship between yield strength calculated using an instrumented indentation test and yield strength measured by performing a full-thickness tensile test on the steel pipe C. That is, it is a comparison between the weighted average value of the results of the instrumented indentation test at each position of t/4, t/2, and 3t/4 and the value in the full-thickness tensile test. Here, the yield strength when no yield elongation was observed in the stress-strain curve as shown in FIG. 5 was determined as 0.2% offset yield strength.

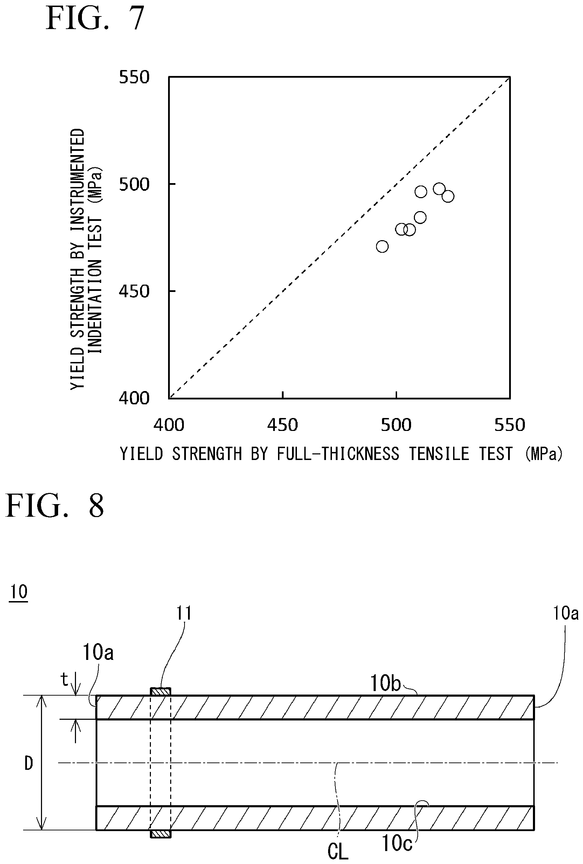

FIG. 7 is a graph showing a verification result of the steel pipe D. FIG. 7 shows a relationship between yield strength calculated using an instrumented indentation test and yield strength measured by performing a full-thickness tensile test on the steel pipe D. That is, it is a comparison between the weighted average value of the results of the instrumented indentation test at each position of t/4, t/2, and 3t/4 and the value in the full-thickness test.

From the results shown in FIGS. 4 to 7, also in the steel pipes B to D, the yield strength measured by performing the round bar tensile test or the full-thickness tensile test showed a positive correlation with the yield strength calculated using the instrumented indentation test.

In general, since the steel pipe D is thermally affected by the ageing treatment, the shape of the SS curve changes and the yield strength increases as compared with the case where the ageing treatment is not performed (for example, the steel pipe C). However, as shown in FIG. 7, even if it is thermally affected by the ageing treatment, the yield strength measured by performing the full-thickness tensile test shows a positive correlation with the yield strength calculated using the instrumented indentation test. Therefore, when the instrumented indentation test is performed on the steel pipe to be subjected to the ageing treatment, the instrumented indentation test may be performed before the ageing treatment or the instrumented indentation test may be performed after the ageing treatment as long as whether the test is performed before or after the ageing treatment is unified.

From the above results, it could be demonstrated that the value of the yield strength obtained by the instrumented indentation test almost matches the value of the yield strength actually measured in the tensile test.

The steel pipe, the steel pipe group, the pipeline, and the steel pipe manufacturing method according to the embodiments of the present invention and the modification examples thereof have been further studied and completed by the present inventor based on the above findings. Before describing the details, the gist is summarized below.

<First Embodiment>

The steel pipe manufacturing method according to the present embodiment includes a preparation step, a measurement step, an acquisition step, and a display step. In the following description, the acquisition step may be referred to as a calculation step.

In the preparation step, a steel pipe having a machined flat pipe end surface is prepared. In the subsequent measurement step, a load-displacement characteristic is measured on the pipe end surface of the steel pipe using an instrumented indentation test. In the subsequent calculation step, the yield strength is calculated based on the load-displacement characteristic measured in the measurement step. In the subsequent display step, information on the yield strength (hereinafter referred to as yield strength information) calculated in the calculation step is displayed on at least one of the outer circumferential surface and the inner circumferential surface of the steel pipe. An embodiment of obtaining a steel pipe to which yield strength information is provided by a manufacturing method including the preparation step, the measurement step, the calculation step, and the display step is hereinafter referred to as a first embodiment.

In the manufacturing method of the first embodiment, in the measurement step, the load-displacement characteristic is measured using the instrumented indentation test on the pipe end surface of the steel pipe, and the yield strength of each steel pipe is calculated in the calculation step based on the load-displacement characteristic. As described above, the value of the yield strength almost matches the value of the yield strength actually measured in the tensile test. In the manufacturing method of the first embodiment, in the display step, the yield strength information calculated in the calculation step is displayed on at least one of the outer circumferential surface and the inner circumferential surface of the steel pipe. Therefore, when the plurality of steel pipes obtained in this manner are joined to each other, the operator can select a combination of steel pipes in which the yield strength difference between the steel pipes to be joined is small by confirming the displayed yield strength information. As a result, when the steel pipes are connected to each other by welding to manufacture a pipeline, occurrence of buckling in the vicinity of the circumferential weld between the steel pipes can be suppressed. In addition, in the instrumented indentation test, since the pipe end surface machined flat of the steel pipe can be used without additional processing, it is not necessary to collect a test piece from the steel pipe, and the yield strength information can be obtained simply in a short time and at low cost. Therefore, according to the steel pipe manufacturing method of the first embodiment, it is possible to manufacture a steel pipe suitable for manufacturing a pipeline capable of suppressing occurrence of buckling in the vicinity of the circumferential weld between the steel pipes, simply and with good yield.

<Second Embodiment>

In the second embodiment, the information displayed in the display step is the value itself of the yield strength calculated in the calculation step. The rest are the same as those of the first embodiment, and thus the overlapping description thereof will be omitted here.

In the manufacturing method of the second embodiment, in the display step, the value itself of the yield strength calculated in the calculation step is written on at least one of the outer circumferential surface and the inner circumferential surface of the steel pipe. Therefore, when joining the steel pipes, the operator can select a combination of steel pipes in which the yield strength difference is smaller by confirming the numerical value of the written yield strength. Therefore, appropriate steel pipes can be selected with a specific numerical value.

<Third Embodiment>

In the third embodiment, the information displayed in the display step is a sign corresponding to the yield strength level including the value of the yield strength calculated in the calculation step. The rest are the same as those of the first embodiment, and thus the overlapping description thereof will be omitted here.

In the manufacturing method of the third embodiment, in the display step, the sign corresponding to the yield strength level including the value of the yield strength calculated in the calculation step is displayed on at least one of the outer circumferential surface and the inner circumferential surface of the steel pipe. The sign indicates the level of yield strength divided for each predetermined range. In short, by displaying such a sign on each of the plurality of steel pipes, the steel pipes are classified according to the value of the yield strength. As a result, when joining the steel pipes, the operator can easily select a combination of steel pipes in which the yield strength difference is small by confirming the displayed sign. Therefore, it is possible to more easily select appropriate steel pipes.

<Fourth Embodiment>

The steel pipe according to the present embodiment includes a pipe end surface, an outer circumferential surface, and an inner circumferential surface. The pipe end surface is machined flat. Yield strength information is displayed on at least one of the outer circumferential surface and the inner circumferential surface. The yield strength is calculated based on the load-displacement characteristic measured on the pipe end surface using an instrumented indentation test. The rest are the same as those of the first embodiment, and thus the overlapping description thereof will be omitted here.

In the steel pipe of the fourth configuration, the yield strength information of the steel pipe is displayed on at least one of the outer circumferential surface and the inner circumferential surface of the steel pipe. The yield strength information relates to the yield strength obtained by the instrumented indentation test. When joining such steel pipes to each other, the operator can select steel pipes to be joined so that the yield strength difference between the steel pipes is small by confirming the displayed information. As a result, when the steel pipes are connected to each other by welding to manufacture a pipeline, occurrence of buckling in the vicinity of the circumferential weld between the steel pipes can be suppressed. Therefore, the steel pipe of the fourth embodiment is suitable for manufacturing a pipeline capable of suppressing occurrence of buckling in the vicinity of the circumferential weld between the steel pipes.

<Fifth Embodiment>

In addition, the pipeline according to the present embodiment includes the plurality of steel pipes according to the fourth embodiment connected to each other by welding. With respect to the yield strength information displayed on each steel pipe, a difference in yield strength between the steel pipes connected to each other is within a predetermined range. According to the pipeline of the fifth embodiment, since the difference in yield strength between the joined steel pipes is suppressed within the predetermined range, occurrence of buckling in the vicinity of the circumferential weld between the steel pipes can be suppressed.

Following the gist of the description, the embodiments and the modification examples of the present invention will be described below with reference to the drawings. In the drawings, the same or similar constitution are denoted by the same reference numerals, and the overlapping description will be omitted.

[Steel pipe]

FIG. 8 is a cross-sectional view of a steel pipe 10 according to the present embodiment as viewed in a cross section including a central axis CL thereof. The steel pipe 10 is a component used for manufacturing a pipeline for transporting natural gas or crude oil. Details of the pipeline will be described later. In the present embodiment, the steel pipe 10 is a seamless steel pipe. However, the steel pipe 10 may be a welded steel pipe such as an electric resistance welded steel pipe or a UO steel pipe. Hereinafter, the longitudinal direction in which the steel pipe 10 extends (direction along the central axis CL) is referred to as an axial direction. The steel pipe 10 has annular pipe end surfaces 10a at both ends in the axial direction. Further, the steel pipe 10 has an outer circumferential surface 10b and an inner circumferential surface 10c.

The total length of the steel pipe 10 in the axial direction is, for example, 12 m. An outer diameter D of the steel pipe 10 is, for example, 193 to 1200 mm, and a wall thickness t of the steel pipe 10 is, for example, 7.0 mm to 40.0 mm.

Referring to FIG. 8, a sign 11 is displayed on the outer circumferential surface of the steel pipe 10. The sign 11 is information corresponding to the value of the yield strength (yield strength information) of the steel pipe 10. The value of the yield strength of the steel pipe 10 is calculated based on the load-displacement characteristic measured using an instrumented indentation test to be described later, on at least one of the pipe end surfaces 10a at both ends of the steel pipe 10. The numerical value of the yield strength in the steel pipe 10 may be slightly different between the case of being obtained at one end and the case of being obtained at the other end of the steel pipe 10. This is a yield strength difference between one end and the other end caused by the method for manufacturing the steel pipe 10. For example, in a steel pipe manufactured from a hot band such as an ERW steel pipe, a yield strength difference at both ends is not so large. On the other hand, in a steel pipe formed from a thick plate such as a UOE steel pipe or a JCO steel pipe, since the temperature at which cooling is started is different between the top side and the bottom side (lower at the bottom side), a yield strength difference may occur between the top and the bottom of the final steel pipe. However, this yield strength difference is smaller than the value of the yield strength difference between the steel pipes to be joined to each other and can be ignored. Therefore, as the value of the yield strength, a value obtained only at one end of the steel pipe 10 may be adopted, or an average value of values obtained at both ends of the steel pipe 10 may be adopted.

The sign 11 indicates the level of yield strength of the steel pipe 10 divided for each predetermined range. By displaying such a sign 11 on the plurality of steel pipes 10, the steel pipes 10 are classified into a plurality of sections according to the value of the yield strength.

As the sign 11, a color band color-coded for each height of yield strength may be displayed by being wound around the outer circumferential surface 10b of the steel pipe 10. The sign 11 is not limited to the color band, and may be one in which paints color-coded for each height of yield strength are applied to the outer circumferential surface 10b. The level of yield strength indicated by the sign 11 may be set to be divided, for example, every 20 MPa.

In the example of the present embodiment, the yield strength information of the steel pipe 10 is indicated by the sign 11 indicating the strength level of the yield strength of the steel pipe 10. However, the yield strength information displayed on the outer circumferential surface 10b of the steel pipe 10 is not limited only to the sign 11. For example, the yield strength information may be a value of the yield strength itself. In short, the value of the yield strength itself may be described on the outer circumferential surface 10b of the steel pipe 10. Alternatively, a barcode including information on the value of the yield strength may be attached to the outer circumferential surface 10b of the steel pipe 10.

Alternatively, the yield strength information of the steel pipe 10 may be displayed as a product number associated with the numerical value of the yield strength of the steel pipe 10. In this case, the product number display is written on the outer circumferential surface 10b of the steel pipe 10. Further, a list of the correspondence relationship between the product number display and the yield strength is recorded on paper or an electronic medium so that an operator who manufactures the pipeline can refer to the list at the time of joining operation. For example, in a case where the list is recorded in an electronic medium, the list is sorted in ascending order or descending order of yield strength on an electronic terminal, so that it is possible to obtain an arrangement order in which the yield strength difference between adjacent steel pipes is small. As a result, the operator can select the product numbers according to the arrangement order of the yield strengths by checking the sorted list and join the steel pipes. As described above, the yield strength information is not limited to the display directly related to the value of the yield strength of each steel pipe, but also includes information connecting the selected steel pipe and the value of the yield strength of the steel pipe in a one-to-one correspondence relationship.

As described above, the yield strength information includes at least one of a numerical value display of the yield strength, a section display indicating a section to which the numerical value of the yield strength corresponds, a color display indicating a section to which the numerical value of the yield strength corresponds, and a product number display associated with the numerical value of the yield strength.

In addition, the display position of the yield strength information may be only the outer circumferential surface 10b exemplified above, only the inner circumferential surface 10c, or both the outer circumferential surface 10b and the inner circumferential surface 10c. Moreover, in the circumferential direction of the steel pipe 10, the display position may be displayed only on a part thereof, but it is preferable to display over the whole circumference because it can be visually

**EP 4 477 333 A1**

recognized regardless of how the steel pipe 10 is placed.

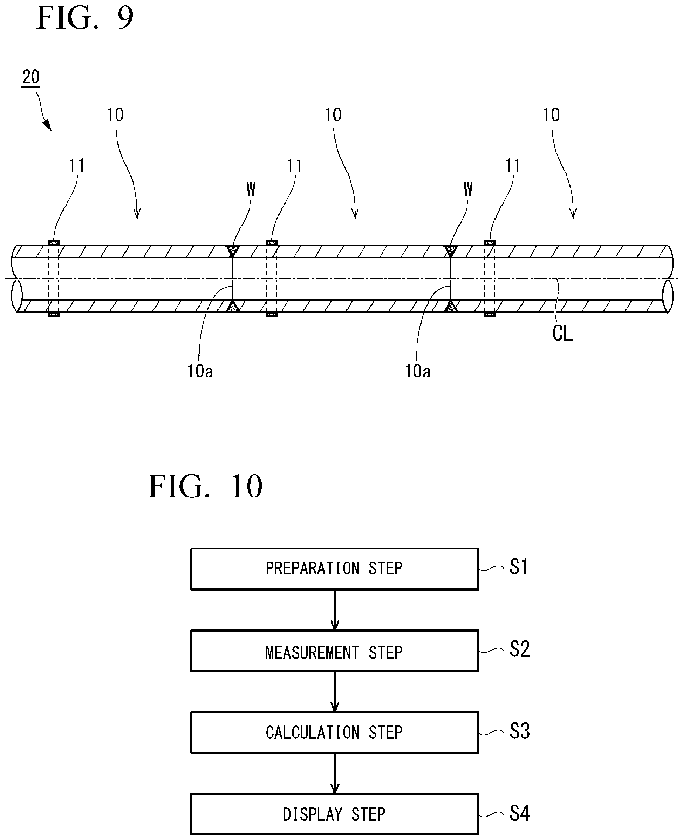

FIG. 9 is a cross-sectional view of the pipeline 20 according to the present embodiment as viewed in a cross section along the longitudinal direction thereof. More specifically, it is a longitudinal cross-sectional view seen in a cross section including the central axis CL.

The pipeline 20 includes a plurality of steel pipes 10. The steel pipes 10 are connected to each other by welding in a state of being coaxially arranged. That is, the pipelines 20 are formed by welding and joining the steel pipes 10 to each other at a circumferential weld W. When the steel pipes 10 are welded, the steel pipes 10 adjacent to each other in the central axis CL direction are joined so that a difference in yield strength falls within a predetermined range. The yield strength difference between the adjacent steel pipes 10 is preferably 65 MPa or less.

[Method for manufacturing steel pipe]

FIG. 10 is a flowchart showing a method for manufacturing the steel pipe 10 according to the present embodiment. As shown in FIG. 10, the manufacturing method of the present embodiment includes a preparation step (S1), a measurement step (S2), a calculation step (S3), and a display step (S4). Hereinafter, each step shown in FIG. 10 will be specifically described.

[Preparation step (S1)]

In the preparation step (S1), a plurality of steel pipes 10 are prepared. As a method for manufacturing the steel pipe 10, a known method may be used. When the steel pipe 10 is a seamless steel pipe, the steel pipe 10 is manufactured by Mannesmann method using, for example, a solid round billet as a material. When the steel pipe 10 is a welded steel pipe, the steel pipe 10 is manufactured by forming a steel sheet into a tubular shape and seam welding side edges of the steel sheet. The steel pipe 10 has a machined pipe end surface 10a. Machining is performed on the pipe end surface 10a in order to join the steel pipes 10 by circumferential welding. Then, in the next step, measurement by an instrumented indentation test is performed using the machined pipe end surface 10a.

The measurement position to which the instrumented indentation test is applied is limited only to the pipe end surface 10a. Even at a position close to the pipe end, the instrumented indentation test is not applied to the outer circumferential surface 10b and the inner circumferential surface 10c of the steel pipe 10. There are two reasons for this: properties of the measurement surface and strength variation at the pipe end surface (cross section).

First, the properties of the measurement surface will be described. In the instrumented indentation test, it is necessary to finish the measurement surface to a certain roughness or less in advance. Normally, since the outer circumferential surface 10b and the inner circumferential surface 10c of the steel pipe 10 are in a state of being attached with oxidation scale, it is not possible to perform measurement with high accuracy as it is. Therefore, it is necessary to remove the oxidation scale by machining before measurement, which requires extra labor. On the other hand, by using the pipe end surface 10a, which is a cut surface, as a measurement position, it is only necessary to adjust the roughness even if adjustment is required, and it is possible to minimize the necessity of new processing for measurement.

Next, the strength variation at the pipe end surface (cross section) will be described. Welded steel pipes such as ERW steel pipes, UO steel pipes, and JCO steel pipes are manufactured from a sheet by cold working. Therefore, the strength distribution is generated in the wall thickness direction in the cross section at any position in the longitudinal direction of the steel pipe. That is, in many steel pipes, the strength tends to be low at the center of the wall thickness, and the strength tends to be high on the inner circumferential surface and the outer circumferential surface. Similarly, the seamless steel pipe also has a strength distribution in the wall thickness direction due to the influence of the cooling speed during the heat treatment and the subsequent cold working. Therefore, in the measurement of the outer circumferential surface or the inner circumferential surface, the strength of the entire wall thickness cannot be accurately measured. On the other hand, when the pipe end surface 10a is used as a measurement surface as in the present embodiment, the strength of the entire wall thickness can be measured with higher accuracy. For example, in the pipe end surface 10a with a wall thickness t, if the position of t × 1/4, the position of t × 1/2, and the position of t × 3/4 from the outer circumferential surface are measured, the strength of the entire wall thickness t can be accurately measured.

[Measurement step (S2)]

In the measurement step (S2), a load-displacement characteristic is measured on the pipe end surface 10a of the steel pipe 10 using the instrumented indentation test. Specifically, the instrumented indentation test is performed on at least one of the pair of pipe end surfaces 10a of the steel pipe 10. Hereinafter, a specific method of the instrumented indentation test will be described.

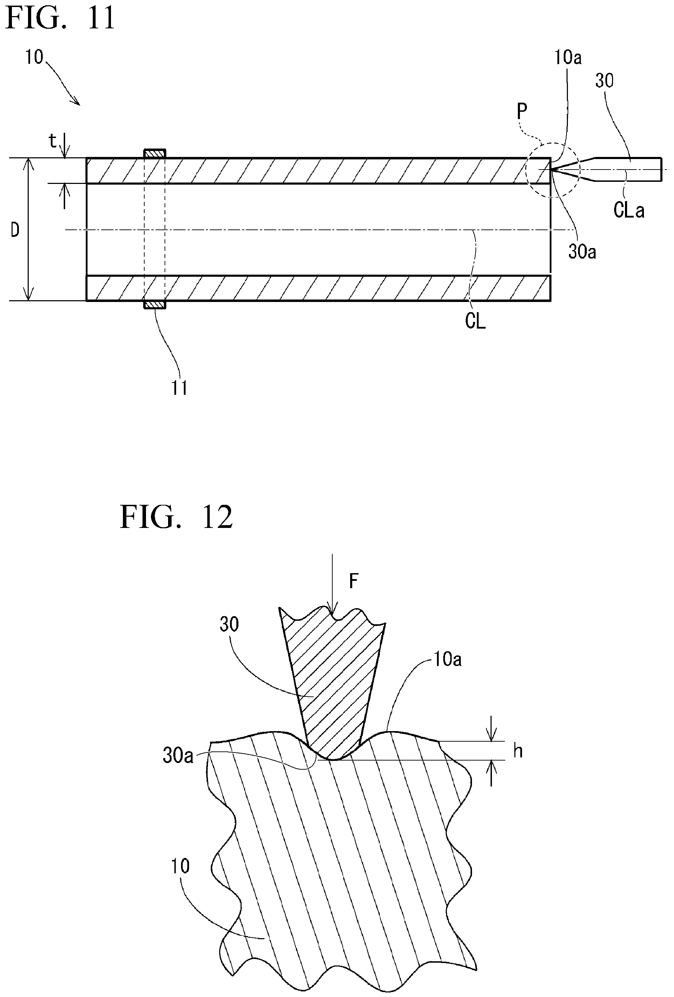

FIG. 11 is a schematic view showing a state of the instrumented indentation test. FIG. 12 is an enlarged view of a portion P in FIG. 11. As shown in FIGS. 11 and 12, a test apparatus (not shown) including an indentation indenter 30 having

**11**

a spherical tip 30a is used for the instrumented indentation test.

The test apparatus includes, for example, a fixing device that fixes a steel pipe 10 to be measured, a loading device that applies an indentation load F perpendicular to a pipe end surface 10a of the steel pipe 10 via an indentation indenter 30, a measuring device that measures a displacement (indentation amount) h of the indentation indenter 30, and a recording device that records a relationship between the indentation load F and the displacement h of the indentation indenter 30. The recording device may record not only the displacement h of the indentation indenter 30 at the end of the test but also the relationship between the indentation load F and the displacement h of the indentation indenter 30 while the indentation indenter 30 is being pressed.

In the instrumented indentation test, the tip 30a of the indentation indenter 30 is pushed against the pipe end surface 10a of the steel pipe 10 to be measured, and the indentation indenter 30 is perpendicularly pressed into the pipe end surface 10a by applying the indentation load F. The indentation indenter 30 may be continuously pressed to a predetermined depth, or may be intermittently pressed including unloading of the load. Also, when the indentation indenter 30 is pressed in, as shown in FIG. 11, the indentation indenter 30 is pressed in such a manner that a central axis CLa of the indentation indenter 30 is perpendicular into the pipe end surface 10a.

The tip 30a of the indentation indenter 30 is preferably spherical from the viewpoint that the surface pressure is dispersed and analysis can be performed with higher accuracy. Moreover, the radius of curvature of the spherical shape is preferably in the range of 0.05 mm to 0.50 mm. For example, an indentation indenter 30 having a radius of curvature of 0.25 mm may be used.

In addition, as the size of the indentation, it is preferable that the diameter in a front view is within a range of 0.1 mm to 1.0 mm and the depth is within a range of 0.02 mm to 0.20 mm. For example, the size of the indentation may be 0.4 mm in diameter and 0.15 mm in depth in front view.

Further, the indentation load of the indentation indenter 30 is preferably in the range of 200 N to 800 N. For example, the indentation load may be 450 N. As a result of applying the indentation load, displacement of the measurement point generated at the indentation position is depth of the indentation.

Furthermore, the presence or absence of an indentation, which is a measurement mark of the instrumented indentation test, is visually confirmed. At this time, when the indentation generated by the instrumented indentation test and the normal scar generated by conveyance operation or the like are compared with each other, the size of the damage mark due to the conveyance operation or the like is much larger than the size of the measurement mark by the indentation indenter, so that both can be visually distinguished.

In the instrumented indentation test, the number of measurement points for one steel pipe 10 is not particularly limited. However, particularly in the steel pipe 10 manufactured by cold forming, there is a strength distribution in the thickness direction and the circumferential direction of the steel pipe 10. Therefore, it is preferable to perform the measurement at a plurality of positions in both the thickness direction and the circumferential direction of the steel pipe 10.

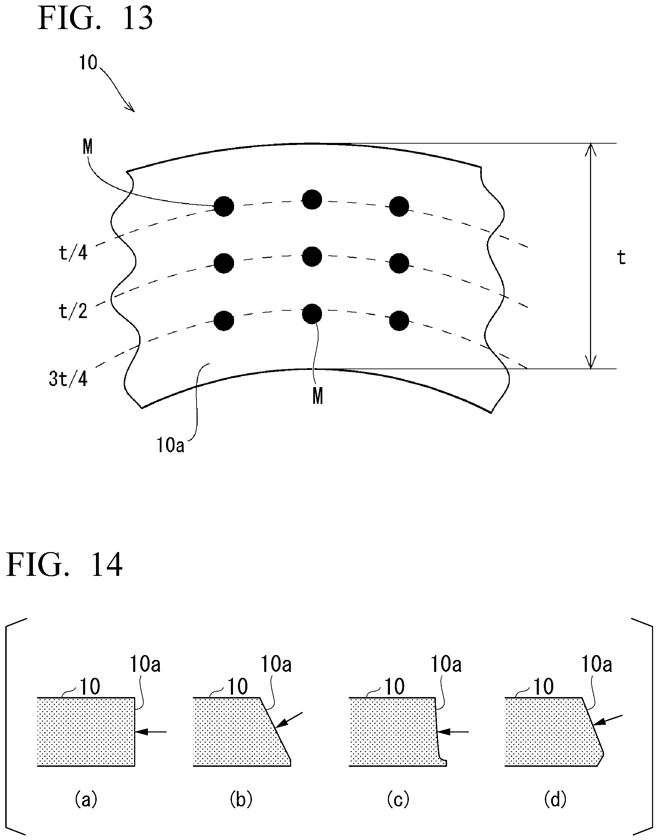

FIG. 13 is a schematic view showing an example of measurement points of the instrumented indentation test. FIG. 13 shows a state in which a part of the pipe end surface 10a of the steel pipe 10 is viewed facing along the axial direction. In the example of FIG. 13, measurement points M are provided on broken lines that divide the wall thickness t of the steel pipe 10 into four equal parts in the thickness direction. Specifically, in the thickness direction, setting the outer circumferential surface of the steel pipe 10 as a reference (0 mm), three measurement points M are provided at equal intervals on each of broken lines at lengths from the reference of t/4, t/2, and 3t/4. Such measurement at a total of 9 measurement points M may be performed at four positions at equal intervals in the circumferential direction of the steel pipe 10.

When a plurality of measurement points M are provided in the thickness direction, yield strength $\sigma_{YS}$ of the steel pipe 10 may be calculated using the following formula (1). In the formula (1), $\sigma_{t/4}$, $\sigma_{t/2}$, and $\sigma_{3t/4}$ are yield strengths measured at positions where the lengths in the thickness direction from the outer circumferential surface of the steel pipe 10 are t/4, t/2, and 3t/4, respectively, on the pipe end surface 10a.

[Mathematical Formula 1]

$$\sigma_{YS} = \frac{1}{4}\sigma_{t/4} + \frac{1}{2}\sigma_{t/2} + \frac{1}{4}\sigma_{3t/4} \qquad (1)$$

In the example of the present embodiment, as shown in FIG. 14(a), the pipe end surface 10a of the steel pipe 10 is a surface perpendicular to the axial direction, and the pipe end is machined and remained flattened (groove unprocessed). However, the end portion of the steel pipe 10 may be groove processed to be welded and joined to another steel pipe 10. Therefore, the pipe end surface 10a may be, for example, a V-shaped groove shown in FIG. 14(b), a U-shaped groove shown in FIG. 14(c), or an X-shaped groove shown in FIG. 14(d). When the steel pipe 10 has a groove, the pipe end surface 10a is not necessarily perpendicular to the axial direction. Even in such a case, it is necessary to press the indentation indenter 30 perpendicularly into the pipe end surface 10a as indicated by an arrow in each of FIGS. 14(b) to 14(d).

[Calculation step (S3)]

In the calculation step (S3), the yield strength is calculated for each of the plurality of steel pipes 10 based on the load-displacement characteristic measured in the measurement step (S2). For example, an SS curve of the steel pipe 10 can be calculated from the load-displacement characteristic by using the method described in ISO/TR29381: 2008 (the method of determining a coefficient by assuming a work hardening formula, the method of obtaining an SS curve by inverse analysis from numerical analysis simulation such as FEA, and the method of using a neural network).

As a supplementary explanation of the present calculation step (S3), the actually used method used the method described in the deformation resistance measurement method of the elastoplastic material in Japanese Unexamined Patent Application, First Publication No. 2019-174270. For each grade (for example, X60, X65, and the like), coefficients of the approximate curve were determined to determine correlation with the yield strength of the tensile test. In the actual measurement for each steel pipe, the coefficient was used to determine the yield strength from the load-displacement curve measured in the instrumented indentation test.

[Display step (S4)]

In the display step (S4), information on the yield strength (yield strength information) calculated in the calculation step (S3) is displayed on each outer circumferential surface of each steel pipe 10. The information displayed in the display step (S4) may be the sign 11 indicating the strength level (section) or color display as described above, may be the value of the yield strength itself, or may be a product number display associated with the numerical value of the yield strength.

[Effects]

In the steel pipe manufacturing method according to the present embodiment, in the measurement step (S2), a load-displacement characteristic is measured using an instrumented indentation test on the pipe end surface 10a of the steel pipe 10. In the calculation step (S3), the yield strength of each steel pipe 10 is calculated based on the load-displacement characteristic. This value of the yield strength almost matches the value of the yield strength actually measured in the tensile test. Furthermore, in the manufacturing method according to the present embodiment, in the display step (S4), the information on the yield strength calculated in the calculation step (S3) is displayed on the outer circumferential surface of the steel pipe 10. Therefore, when the steel pipes 10 thus obtained are joined to each other, the operator can select the steel pipes 10 to be joined so that the yield strength difference is small by confirming the yield strength information displayed on the steel pipe 10. As a result, in the pipeline 20 formed by connecting the steel pipes each other by welding, it is possible to suppress the occurrence of buckling in the vicinity of the circumferential weld W (see FIG. 9) between the steel pipes 10. In addition, the instrumented indentation test used in the measurement step (S2) can be directly performed on the pipe end surface 10a of the steel pipe 10. Therefore, in the instrumented indentation test, it is not necessary to collect a test piece from the steel pipe 10, and the instrumented indentation test can be easily performed. Therefore, according to the steel pipe manufacturing method of the present embodiment, since the occurrence of buckling in the vicinity of the circumferential weld W between the steel pipes 10 can be suppressed, the steel pipe 10 suitable for manufacturing the pipeline 20 can be easily manufactured with high yield.

In the manufacturing method according to the present embodiment, in the display step (S4), the sign 11 corresponding to the yield strength level including the value of the yield strength calculated in the calculation step (S3) is displayed on the outer circumferential surface of the steel pipe 10. The sign 11 indicates the level of yield strength divided for each predetermined range. As a result, when joining the steel pipes 10, the operator can easily select a combination of steel pipes 10 in which the yield strength difference is small by confirming the displayed sign 11. Therefore, it is possible to easily select appropriate steel pipes 10.

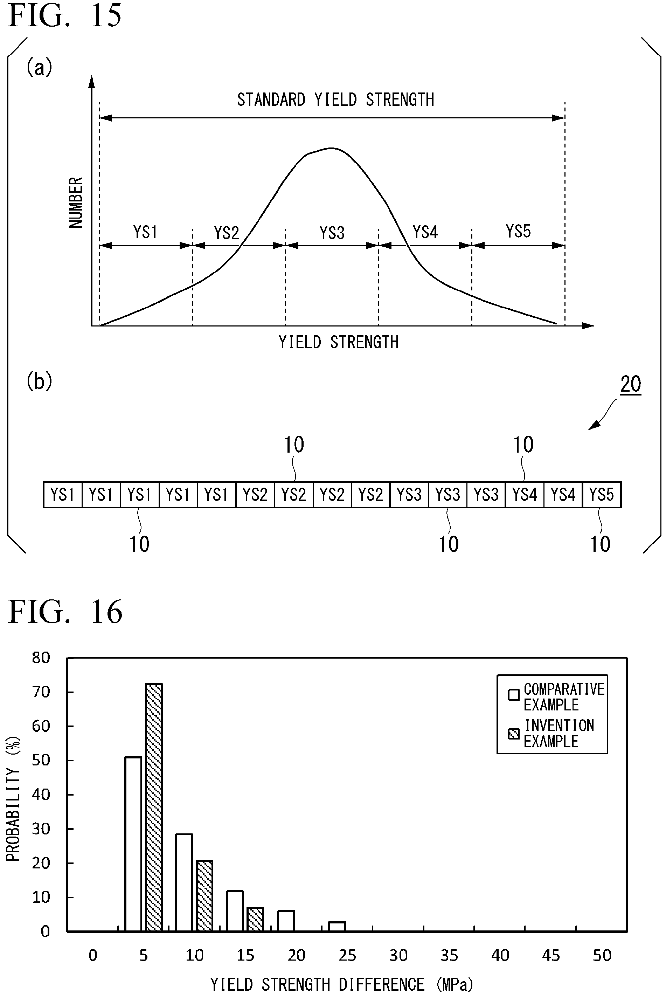

A specific example thereof will be described with reference to FIG. 15. FIG. 15(a) is a graph showing a relationship between yield strength and distribution of number of steel pipes in a steel pipe group arranged on a spool base, where the horizontal axis represents the yield strength and the vertical axis represents the number of steel pipes 10 corresponding to the yield strength. FIG. 15(b) shows an example of the pipeline 20 in which a large number of steel pipes 10 are taken out from the spool base shown in FIG. 15(a) and connected. Here, a steel pipe 10 with the relatively lowest yield strength is denoted by YS1, a steel pipe 10 with the next lowest yield strength is denoted by YS2, a steel pipe 10 with the further next lowest yield strength is denoted by YS3, a steel pipe 10 with the even further next lowest yield strength is denoted by YS4, and a steel pipe 10 with the highest yield strength is denoted by YS5. In this manner, the five color-coded signs (color bands) 11 of YS 1 to YS5 are wound around all the steel pipes 10.

First, a large number of steel pipes 10 manufactured by the above-described steel pipe manufacturing method are arranged on a land spool base (in a partition). The outer circumferential surface 10b of each steel pipe 10 is already provided with the sign 11 indicating yield strength information. Therefore, it is preferable to arrange the steel pipes 10 on the spool base in advance in order of higher yield strength or lower yield strength from the viewpoint of improving operation efficiency.

Subsequently, the operator who manufactures the pipeline 20 selects and takes out from the spool base the steel pipe 10 around which the color band indicating YS1 is wound. Then, the selected steel pipes 10 are joined one after another by circumferential welding.

After all the steel pipes 10 belonging to YS1 are used up, the operator selects and takes out the steel pipes 10 around which the color band indicating YS2 close to YS1 are wound. Then, the steel pipes 10 belonging to the newly selected YS2 are sequentially joined to the steel pipes 10 belonging to the joined YS1 by circumferential welding.

After all the steel pipes 10 belonging to YS2 are used up, the operator selects and takes out the steel pipes 10 around which the color band indicating YS3 close to YS2 are wound. Then, the steel pipes 10 belonging to the newly selected YS3 are sequentially joined to the steel pipes 10 belonging to the joined YS2 by circumferential welding.

After all the steel pipes 10 belonging to YS3 are used up, the operator selects and takes out the steel pipes 10 around which the color band indicating YS4 close to YS3 are wound. Then, the steel pipes 10 belonging to the newly selected YS4 are sequentially joined to the steel pipes 10 belonging to the joined YS3 by circumferential welding.

After all the steel pipes 10 belonging to YS4 are used up, the operator selects and takes out the steel pipes 10 around which the color band indicating YS5 close to YS4 are wound. Then, the steel pipes 10 belonging to the newly selected YS5 are sequentially joined to the steel pipes 10 belonging to the joined YS4 by circumferential welding.

Through the above steps, the pipeline 20 shown in FIG. 15(b) is completed.

In the display step (S4), instead of winding the sign 11 which is the above-described color band around the steel pipe 10, the value itself of the yield strength calculated in the acquisition step (S3) may be written on the outer circumferential surface 10b of the steel pipe 10. Even in this case, when joining the steel pipes 10, the operator can select a combination of steel pipes 10 in which the yield strength difference between the steel pipes to be joined is smaller by confirming the written numerical value. Therefore, appropriate steel pipes 10 can be selected with a specific numerical value.

The pipeline 20 manufactured in this manner includes a plurality of steel pipes 10 connected to each other by welding at the circumferential weld W. In the pipeline 20, a difference in yield strength between the steel pipes 10 connected to each other is within a predetermined range (65 MPa or less). Therefore, it is possible to more reliably suppress the occurrence of buckling in the vicinity of the circumferential weld W between the steel pipes 10. As described above, the pipeline 20 has a total extension of more than 1 km, but if buckling occurs at even one position, the overall watertightness may be impaired. Therefore, at the joint portion between the steel pipes 10, it is desirable to set the difference in yield strength within the predetermined range (65 MPa or less) to more reliably prevent the occurrence of buckling.

[Examples]

[First Example]

In order to confirm the effect of the steel pipe manufactured by the manufacturing method of the present embodiment, the following simulation test was performed.

In the first example, a simulation test assuming the above-described steel pipes A to D was performed.

As a present invention example, a case of preparing a plurality of steel pipes in which information on the yield strength (yield strength information) of the steel pipe is displayed on the outer circumferential surface was assumed. In acquiring the yield strength information, a case of using an instrumented indentation test was assumed. Then, a combination of steel pipes was selected in which the yield strength difference was small when a plurality of steel pipes were connected to each other, and the distribution of the yield strength difference when the selected steel pipes were joined to each other was investigated.

In addition, as a comparative example, a case of preparing a plurality of steel pipes in which information on the yield strength of steel pipes is not displayed was assumed. Then, the distribution of the yield strength difference when arbitrarily selected steel pipes were joined to each other was investigated. It was assumed that the yield strength difference between the joined steel pipes is determined from the yield strength obtained by performing a full-thickness tensile test on each steel pipe before joining.

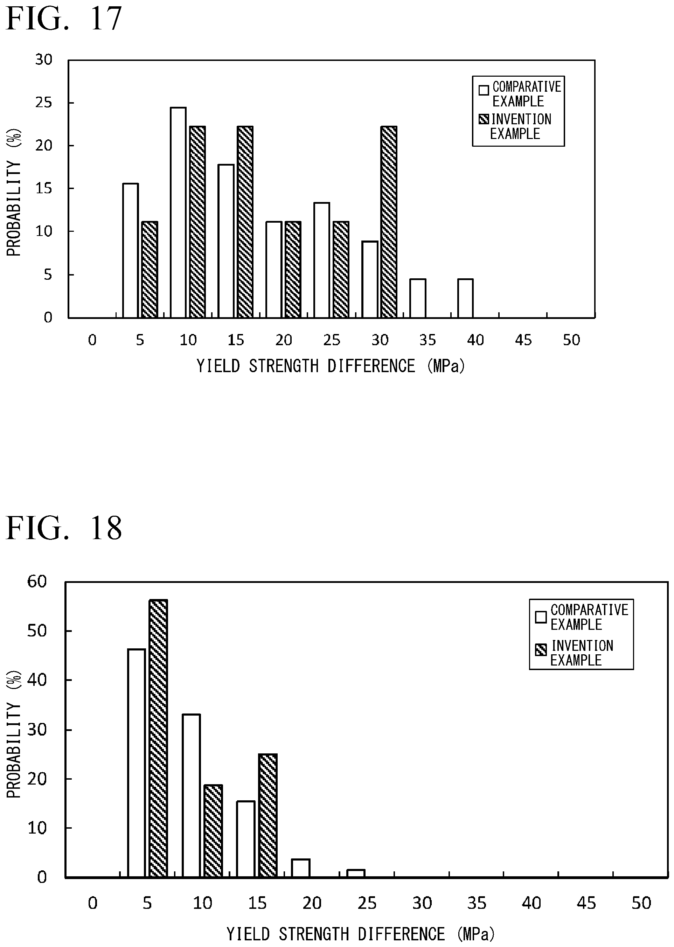

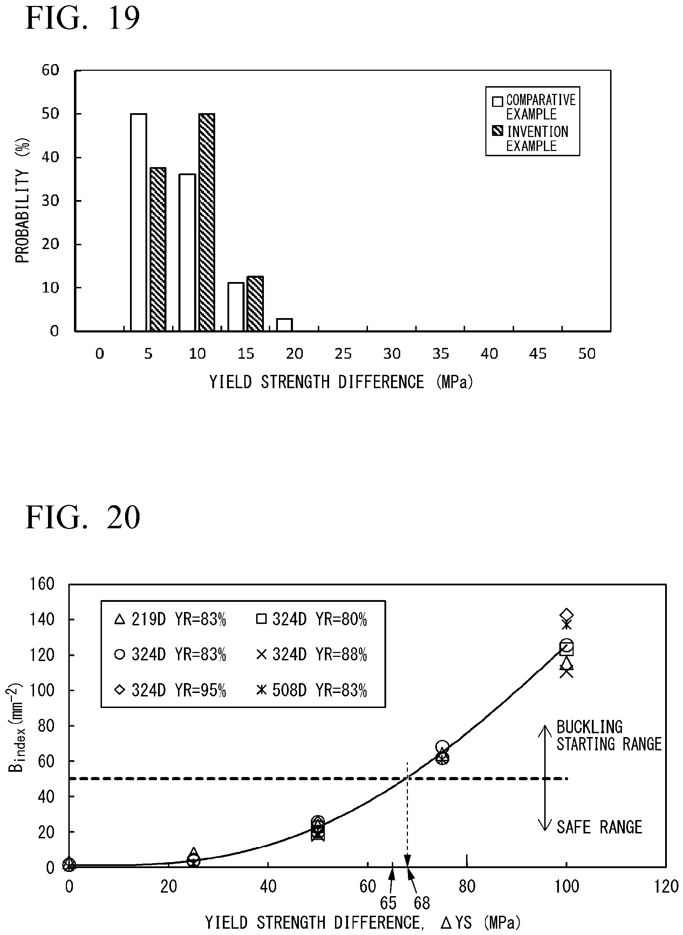

The test results are shown in FIGS. 16 to 19. FIG. 16 is a graph showing test results of the steel pipe A. FIG. 17 is a graph showing test results of the steel pipe B. FIG. 18 is a graph showing test results of the steel pipe C. FIG. 19 is a graph showing test results of the steel pipe D. In these graphs, the horizontal axis represents the yield strength difference, and the vertical axis represents probability that the joined steel pipes have the yield strength difference.

From the results of FIGS. 16 to 19, the maximum yield strength difference of the present invention example in the steel pipes A to C was smaller than that of the comparative example by 10 MPa. Also, from the result of FIG. 19, the maximum yield strength difference of the present invention example in the steel pipe D was smaller than that of the comparative example by 5 MPa. From this, according to the steel pipe manufactured by the manufacturing method according to the present embodiment, it was confirmed that the yield strength difference between the joined steel pipes can be suppressed to be low regardless of the type of the joined steel pipes.

[Second Example]

In the second example, first, in order to verify the conditions under which buckling occurs in the steel pipe, the steel pipe wound around the drum was analyzed (simulated). The buckling characteristics of the steel pipe depend on the outer diameter D of the steel pipe in terms of the dimensions of the steel pipe, and mainly depend on the yield ratio (yield strength/tensile strength) YR in terms of the material of the steel pipe. In addition, the buckling characteristics of the steel pipe are also influenced by the presence or absence of yield elongation and the like, but the influence is small as compared with the yield strength difference $\Delta$YS between the steel pipes. In consideration of the above, a buckling index $B_{index}$ for determining whether or not buckling occurred in the steel pipe was introduced. The buckling index $B_{index}$ is expressed by the following formula (2). In the formula (2), the drum gap $\delta_{max}$ represents the size of the gap between the drum and the steel pipe in the thickness direction of the steel pipe. Here, among the variables of the formula (2), the unit of the buckling index $B_{index}$ is $mm^{-2}$, the unit of the outer diameter D is mm, the unit of the yield ratio YR is %, and the unit of the drum gap $\delta_{max}$ is mm. The drum gap $\delta_{max}$ is a function of the yield strength difference $\Delta$YS. When buckling occurs, the steel pipe is separated from the drum, so that the drum gap $\delta_{max}$ increases.

[Mathematical Formula 2]

$$B_{index} = \frac{\delta_{max}}{D^3} \times \left(\frac{830}{YR}\right)^5 \times 10^3 \qquad \cdots (2)$$

The drum gap $\delta_{max}$ was obtained by FEA simulation. The yield ratio YR was determined by calculating the yield strength and the tensile strength of the steel pipe with a lower yield strength among the joined steel pipes.

In this simulation, analysis was performed on steel pipes with outer diameters D of 219 mm, 324 mm, and 508 mm. The yield ratio YR of these steel pipes was within a range of 80 to 95%. In the analysis, the yield strength difference $\Delta$YS between the joined steel pipes was changed to examine the presence or absence of occurrence of buckling.

FIG. 20 is a diagram showing test results of the second example. As shown in FIG. 20, the larger the yield strength difference $\Delta$YS, the larger the value of the buckling index $B_{index}$. From the analysis result, when the size of the buckling index $B_{index}$ exceeds 50, buckling is likely to occur in the steel pipe. Therefore, from the result of FIG. 20, since the yield strength difference $\Delta$YS corresponding to the size of the buckling index $B_{index}$ of 50 is about 68 MPa, the threshold value of the yield strength difference $\Delta$YS is set to 65 MPa (the buckling index $B_{index}$ at this time is 45 $mm^{-2}$) in anticipation of safety. Accordingly, it can be seen that when the yield strength difference $\Delta$YS between the steel pipes to be joined is 65 MPa or less, the buckling index $B_{index}$ can be almost suppressed to 50 or less, so that occurrence of buckling can be suppressed. For the above reason, the yield strength difference $\Delta$YS between the steel pipes adjacent to each other in the connection direction is preferably suppressed to 65 MPa or less.

Therefore, analysis of cases of carrying out and without carrying out the present invention was performed on the steel pipe wound around the drum, and the presence or absence of occurrence of buckling was determined from the value of the buckling index $B_{index}$. In the present example, in a plurality of steel pipes joined to each other by circumferential welding, the buckling indices $B_{index}$ at arbitrary three positions of the circumferential weld of the steel pipe were obtained respectively.

In the invention example, first, it was assumed that a plurality of steel pipes in which information on the yield strength (yield strength information) calculated based on the load-displacement characteristic measured using an instrumented indentation test is displayed on the outer circumferential surface of the pipe end surface of the steel pipe are prepared. Then, a case of manufacturing a pipeline in which the plurality of steel pipes are joined in such a combination that a yield strength difference is small was assumed. Then, the buckling index $B_{index}$ for the pipeline of this invention example was obtained.

In addition, as a comparative example, a case of manufacturing a pipeline in which steel pipes to be joined are arbitrarily selected and joined was assumed. Then, the buckling index $B_{index}$ for the pipeline of this comparative example was obtained.

For each of the above invention examples and comparative examples, a case where the value of the buckling index $B_{index}$ was 50 or less at all three positions was regarded as pass, and conversely, a case where the value of the buckling index $B_{index}$ was more than 50 was regarded as fail.

The results of Invention Examples 1 to 8 are shown in Table 1 below.

Invention Examples 1 to 4 are examples in which the yield strength information displayed on the steel pipe is the value of the yield strength itself.

Invention Examples 5 to 8 are examples of a color band in which the information on the yield strength displayed on the steel pipe is color-coded by setting the strength level every 20 MPa. In Table 1, the yield strength difference indicates a difference in the value of the yield strength itself.

As shown in Table 1, in any of Invention Examples 1 to 8, the value of the buckling index $B_{index}$ in all the three circumferential welds achieves 50 or less. Therefore, in Invention Examples 1 to 8, it can be seen that occurrence of buckling can be suppressed.

[Table 1]

| No. | Outer diameter D (mm) | Yield rate YR (%) | Yield strength difference $\Delta YS$ (MPa) | Drum gap $\delta_{max}$ (mm) | Buckling index $B_{index}$ (mm$^{-2}$) | Buckling determination $B_{index} \leq 150$ | Pass/fail determination |
|---|---|---|---|---|---|---|---|
| Invention Example 1 | 219 | 83 | 32 | 1.0 | 9.7 | Satisfied | Pass |
| | | 83 | 30 | 0.9 | 8.6 | Satisfied | |
| | | 83 | 33 | 1.1 | 10.0 | Satisfied | |
| Invention Example 2 | 324 | 83 | 30 | 1.7 | 5.1 | Satisfied | Pass |
| | | 83 | 35 | 2.9 | 8.5 | Satisfied | |
| | | 83 | 35 | 3.0 | 8.8 | Satisfied | |
| Invention Example 3 | 324 | 80 | 34 | 2.6 | 9.2 | Satisfied | Pass |
| | | 88 | 30 | 1.8 | 3.9 | Satisfied | |
| | | 95 | 41 | 4.7 | 7.0 | Satisfied | |
| Invention Example 4 | 508 | 83 | 32 | 6.4 | 4.9 | Satisfied | Pass |
| | | 83 | 33 | 6.5 | 4.9 | Satisfied | |
| | | 83 | 38 | 10.5 | 8.0 | Satisfied | |
| Invention Example 5 | 219 | 83 | 44 | 2.0 | 19.0 | Satisfied | Pass |
| | | 83 | 42 | 1.8 | 16.9 | Satisfied | |
| | | 83 | 37 | 1.4 | 13.1 | Satisfied | |
| Invention Example 6 | 324 | 83 | 43 | 5.3 | 15.7 | Satisfied | Pass |
| | | 83 | 54 | 9.7 | 28.5 | Satisfied | |
| | | 83 | 44 | 5.7 | 16.6 | Satisfied | |
| Invention Example 7 | 324 | 80 | 49 | 7.6 | 26.7 | Satisfied | Pass |
| | | 88 | 55 | 10.1 | 22.3 | Satisfied | |
| | | 95 | 51 | 8.4 | 12.6 | Satisfied | |
| Invention Example 8 | 508 | 83 | 45 | 17.8 | 13.6 | Satisfied | Pass |
| | | 83 | 57 | 35.7 | 27.3 | Satisfied | |
| | | 83 | 43 | 15.3 | 11.7 | Satisfied | |

The results of Comparative Examples 1 to 4 are shown in Table 2 below.

As shown in Table 2, in any of Comparative Examples 1 to 4, the value of the buckling index $B_{index}$ is larger than 50 at at least one of the three circumferential welds. Therefore, in Comparative Examples 1 to 4, it can be seen that buckling may occur.

[Table 2]

| No. | Outer diameter D (mm) | Yield rate YR (%) | Yield strength difference $\Delta$YS (MPa) | Drum gap $\delta_{max}$ (mm) | Buckling index $B_{index}$ (mm$^{-2}$) | Buckling determination $B_{index} \leq 50$ | Pass/fail determination |
|---|---|---|---|---|---|---|---|
| Comparative Example 1 | 219 | 83 | 44 | 2.0 | 19.0 | Satisfied | Fail |
| | | 83 | 98 | 11.5 | 109.3 | Not satisfied | |
| | | 83 | 53 | 3.1 | 29.1 | Satisfied | |
| Comparative Example 2 | 324 | 83 | 53 | 9.4 | 27.5 | Satisfied | Fail |
| | | 83 | 82 | 26.9 | 79.2 | Not satisfied | |
| | | 83 | 56 | 10.7 | 31.5 | Satisfied | |
| Comparative Example 3 | 324 | 80 | 49 | 7.4 | 26.3 | Satisfied | Fail |
| | | 88 | 51 | 8.4 | 18.5 | Satisfied | |
| | | 95 | 113 | 56.3 | 84.3 | Not satisfied | |
| Comparative Example 4 | 508 | 83 | 45 | 17.8 | 13.5 | Satisfied | Fail |
| | | 83 | 105 | 206.0 | 157.2 | Not satisfied | |
| | | 83 | 66 | 54.9 | 41.9 | Satisfied | |

The embodiments, examples, and various modification examples of the present invention have been described above. However, the above-described embodiments, examples, and various modification examples are merely examples for carrying out the present invention. Therefore, the present invention is not limited only to the above-described contents, and can be appropriately modified and implemented without departing from the gist thereof.

For example, in the above embodiment, the case where the present invention is applied to manufacturing of a pipeline has been exemplified, but the present invention may be applied to a building material used for a building structure.

The gist of the present invention is summarized below.

(1) As shown in FIG. 8, the steel pipe 10 according to one aspect of the present invention includes a pipe end surface 10a that is machined and has an indentation that is a measurement mark of an instrumented indentation test, and an outer circumferential surface 10b to which a sign 11 that is yield strength information corresponding to yield strength at a position of the indentation is provided. The yield strength information may be provided to an inner circumferential surface 10c, or may be provided to both the outer circumferential surface 10b and the inner circumferential surface 10c.

(2) In the aspect of (1) above, the yield strength information may include at least one of a numerical value display of the yield strength, a section display indicating a section to which the numerical value of the yield strength corresponds, a color display indicating a section to which the numerical value of the yield strength corresponds, and a product number display associated with the numerical value of the yield strength. In the example of FIG. 8, a sign 11 which is the color display is adopted.

(3) As shown in FIG. 15, in the steel pipe group according to one aspect of the present invention, all of the plurality of steel pipes arranged in a partition are the steel pipes 10 according to (1) or (2) above.

(4) In the steel pipe group according to (3) above, the steel pipes 10 may each be divided and arranged according to the yield strength information, in the partition.

(5) As shown in FIG. 15, in the pipeline 20 according to one aspect of the present invention, a plurality of the steel pipes 10 according to any one of (1) to (4) above are joined to each other by circumferential welding, and a difference in the yield strength between the steel pipes 10 adjacent to each other in the connection direction is 65 MPa or less.

(6) As shown in FIG. 10, the steel pipe manufacturing method according to one aspect of the present invention includes a preparation step S1 of preparing a steel pipe 10 having a machined pipe end surface 10a, a measurement step S2 of measuring a load-displacement characteristic on the pipe end surface 10a by an instrumented indentation test, an acquisition step (calculation step) S3 of obtaining yield strength based on the load-displacement characteristic measured in the measurement step S2, and a display step S4 of displaying yield strength information on the yield strength obtained in the acquisition step on at least one of an outer circumferential surface 10b and an inner circumferential surface 10c of the steel pipe 10.

(7) In the steel pipe manufacturing method of (6) above, in the display step S4, as the yield strength information, at least one of a numerical value display of the yield strength, a section display indicating a section to which the numerical value of the yield strength corresponds, a color display indicating a section to which the numerical value of the yield strength corresponds, and a product number display associated with the numerical value of the yield strength may be displayed. In the example of FIG. 8, a sign 11 which is the color display is adopted.

[Industrial Applicability]

According to the method for manufacturing a steel pipe according to the above aspect of the present invention, it is possible to easily manufacture a steel pipe suitable for manufacturing a pipeline capable of suppressing occurrence of buckling in the vicinity of the circumferential weld between steel pipes. In addition, the steel pipe according to the above aspect of the present invention is suitable for manufacturing a pipeline capable of suppressing occurrence of buckling in the vicinity of the circumferential weld between steel pipes. Furthermore, according to the pipeline according to the above aspect of the present invention, it is possible to suppress the occurrence of buckling in the vicinity of the circumferential weld between the steel pipes.

[Brief Description of the Reference Symbols]

10 Steel pipe
10a Pipe end surface
10b Outer circumferential surface
10c Inner circumferential surface
11 Sign
20 Pipeline
30 Indentation indenter
S 1 Preparation step
S2 Measurement step
S3 Acquisition step
S4 Display step

**Claims**

1. A steel pipe comprising:

   a pipe end surface that is machined and has an indentation that is a measurement mark of an instrumented indentation test; and
   at least one of an outer circumferential surface and an inner circumferential surface to which yield strength information corresponding to yield strength at a position of the indentation is provided.

2. The steel pipe according to claim 1, wherein
   the yield strength information comprises at least one of:

   a numerical value display of the yield strength;
   a section display indicating a section to which the numerical value of the yield strength corresponds;
   a color display indicating a section to which the numerical value of the yield strength corresponds; and
   a product number display associated with the numerical value of the yield strength.

3. A steel pipe group, wherein all of a plurality of steel pipes arranged in a partition are the steel pipes according to claim 1 or 2.

4. The steel pipe group according to claim 3, wherein the steel pipes are each divided and arranged according to the yield strength information, in the partition.

5. A pipeline in which a plurality of the steel pipes according to claim 1 or 2 are joined to each other by circumferential welding, wherein
a difference in the yield strength between the steel pipes adjacent to each other in a connection direction is 65 MPa or less.

6. A steel pipe manufacturing method comprising:

a preparation step of preparing a steel pipe having a machined pipe end surface;
a measurement step of measuring a load-displacement characteristic on the pipe end surface by an instrumented indentation test;
an acquisition step of obtaining yield strength based on the load-displacement characteristic measured in the measurement step; and
a display step of displaying yield strength information on the yield strength obtained in the acquisition step on at least one of an outer circumferential surface and an inner circumferential surface of the steel pipe.

7. The steel pipe manufacturing method according to claim 6, wherein
in the display step, as the yield strength information, at least one of:

a numerical value display of the yield strength;
a section display indicating a section to which the numerical value of the yield strength corresponds;
a color display indicating a section to which the numerical value of the yield strength corresponds; and
a product number display associated with the numerical value of the yield strength,
is displayed.

## FIG. 1

## FIG. 2

## FIG. 3

## FIG. 4

# FIG. 5

# FIG. 6

# FIG. 7

# FIG. 8

# FIG. 9

# FIG. 10

| PREPARATION STEP | S1 |
| --- | --- |
| MEASUREMENT STEP | S2 |
| CALCULATION STEP | S3 |
| DISPLAY STEP | S4 |

FIG. 11

FIG. 12

## FIG. 13

## FIG. 14

(a)　　　　(b)　　　　(c)　　　　(d)

# FIG. 15

(a)

(b)

# FIG. 16

## FIG. 17

## FIG. 18

## FIG. 19

## FIG. 20

## INTERNATIONAL SEARCH REPORT

| International application No. |
| --- |
| **PCT/JP2023/002578** |

**A. CLASSIFICATION OF SUBJECT MATTER**

***B21C 37/08***(2006.01)i; ***B21C 51/00***(2006.01)i
FI: B21C37/08 A; B21C51/00 A

According to International Patent Classification (IPC) or to both national classification and IPC

**B. FIELDS SEARCHED**

Minimum documentation searched (classification system followed by classification symbols)

B21C37/08; B21C51/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 6969713 B1 (JFE STEEL CORP) 24 November 2021 (2021-11-24) <br> paragraph [0055] | 1-7 |
| A | JP 2006-281217 A (SUMITOMO METAL IND LTD) 19 October 2006 (2006-10-19) <br> claims | 1-7 |
| A | JP 63-231239 A (MATSUZAWA SEIKI KK) 27 September 1988 (1988-09-27) <br> p. 17, lower left column, line 4 to p. 18, upper right column, line 7 | 1-7 |
| A | JP 50-92790 A (NIPPON STEEL CORPORATION) 24 July 1975 (1975-07-24) <br> claims | 1-7 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 March 2023** | **20 March 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/002578**

| Patent document cited in search report | | | Publication date (day/month/year) | Patent family member(s) | Publication date (day/month/year) |
|---|---|---|---|---|---|
| JP | 6969713 | B1 | 24 November 2021 | WO 2022/054336 A1 | |
| JP | 2006-281217 | A | 19 October 2006 | (Family: none) | |
| JP | 63-231239 | A | 27 September 1988 | US 4896339 A column 17, line 42 to column 18, line 27 EP 289127 A2 KR 10-1988-0011582 A | |
| JP | 50-92790 | A | 24 July 1975 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022016940 A
- WO 2013111902 A
- WO 2020067064 A
- JP 2019174270 A

**Non-patent literature cited in the description**

- **EIJI TSURU**. *Reeling Capability of Non-Heat-Treated ERW Line Pipes in R-lay*, 2013